# EUROPÄISCHE PATENTSCHRIFT

(11) **EP 1 700 372 B1**
(45) Veröffentlichungstag und Bekanntmachung des Hinweises auf die Patenterteilung: **11.07.2012**
(21) Anmeldenummer: 04798049.5
(22) Anmeldetag: 23.11.2004
(51) Int. Cl.: H02M 7/5387

(54) **UMRICHTER**
CONVERTER
CONVERTISSEUR

(30) Priorität: 23.12.2003 DE 10361430
(43) Veröffentlichungstag der Anmeldung: 13.09.2006
(73) Patentinhaber: SEW-EURODRIVE GmbH & Co. KG, 76646 Bruchsal (DE)
(72) Erfinder: SCHUSTER, Thomas, 73113 Ottenbach (DE); WOLF, Harald, 76698 Ubstadt-Weiher (DE)
(86) Internationale Anmeldenummer: PCT/EP2004/013261
(87) Internationale Veröffentlichungsnummer: WO 2005/067128

(56) Entgegenhaltungen:
- DE-A1- 2 640 622
- DE-A1- 10 063 086
- DE-A1- 10 302 602
- DE-A1- 19 942 203

## Beschreibung

Die Erfindung betrifft einen Umrichter.

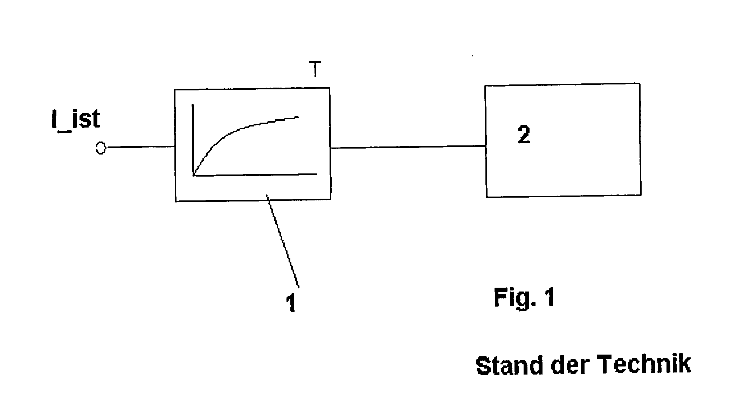

Bei Umrichtern ist bekannt, den Istwert *I_ist* des Motorstromes zu erfassen, wobei die Stromerfassungsmittel im Umrichter angeordnet sind. Die Signale, welche aus den Stromerfassungsmitteln der Steuerelektronik zur Verfügung gestellt werden, werden zuerst einem Filter 1, beispielsweise einem PT1 Filter, wie in Figur 1 dargestellt. Somit stehen dem Mikrocontroller 2 geglättete Messsignale zur Verfügung und Störsignale werden unterdrückbar. Das PT1 Filter ist als Tiefpassfilter vorteiligerweise mit einer Zeitkonstante von beispielsweise 20 µs ausgeführt.

Nachteilig ist bei diesen Umrichtern, dass bei Verwendung von langen Kabeln zwischen dem Umrichter und dem versorgten Elektromotor die Kapazität der Kabel zu hohen Umladestromspitzen führt. Denn die Umrichter sind pulsweitenmoduliert betrieben und eine Spannungsänderung am Ausgang des Umrichters führt zu kurzzeitig auftretenden großen Aufladestromspitzen dieser Kabel-Kapazität.

**Aus der** WO 02/19511 A1 **ist eine Lüfteranordnung bekannt, die einen Wechselrichter, einen Elektromotor, einen Strommesswiderstand und einen Strombegrenzer sowie eine Tiefpassfilter und einen A/D-Wandler umfasst.**

Der Erfindung liegt daher die Aufgabe zugrunde, die Stromerfassung bei Umrichtern zu verbessern.

Erfindungsgemäß wird die Aufgabe bei dem Umrichter nach den in Anspruch 1 angegebenen Merkmalen gelöst.

Wesentliche Merkmale der Erfindung bei dem Umrichter sind, dass er mindestens Mittel zur Stromerfassung der dem vom Umrichter versorgten Elektromotor zugeführten Ströme umfasst,
wobei die Mittel zur Stromerfassung innerhalb des Umrichters angeordnet sind,
wobei die Signale der Mittel einem nichtlinearen Filter zugeführt werden, dessen Ausgangssignale einem weiteren Filter zugeführt werden, das mit einem Analog-Digital-Wandler verbunden ist.

Von Vorteil ist dabei, dass eine hohe Regelgüte und Regelqualität erreichbar ist bei Umrichtern, die mittels langer Kabel mit dem jeweils versorgten Elektromotor verbunden sind. Denn die wegen der großen Kabelkapazität auftretenden Umladestromspitzen sind hervorragend wegfilterbar, insbesondere mindestens eine Größenordnung besser als mit einem bloßen PT1-Filter. Wesentlich dabei ist, dass nicht nur der Spitzenwert des gefilterten Signals geringer ist sondern vor allem, dass die Spannungs-Zeit-Fläche sehr viel kleiner vorsehbar ist als bei einem PT1-Filter oder auch anderen linearen Filtern.

Das nichtlineare Filter ist stets derart ausgelegt, dass die Änderungen des Stromwertes, welche maschinenbedingt sind, also von der Ausführung des Elektromotors bestimmt sind, im Wesentlichen ungestört durchgelassen werden. Umladestromspitzen mit kleinen Zeitdauern gegenüber der charakteristischen Zeit des nichtlinearen Filters werden im Gegensatz dazu im Messsignal unterdrückt. Stromänderungen, die beispielsweise durch mechanische Belastungsänderungen des Rotors des Elektromotors bedingt sind, werden hingegen im Wesentlichen ungeändert durchgelassen.

Bei einer vorteilhaften Ausgestaltung ist der Analog-Digital-Wandler in einem Mikrocontroller oder Mikroprozessor integriert. Von Vorteil ist dabei, dass möglichst wenige kostengünstige Bauelemente verwendbar sind.

Erfindungsgemäß ist das nichtlineare Filter ein Hochlaufgeber. Von Vorteil ist dabei, dass eine besonders einfach aufzubauende Komponente herstellbar ist.

Bei einer vorteilhaften Ausgestaltung umfasst der Hochlaufgeber einen Vergleicher und einen Integrierer. Von Vorteil ist dabei, dass Standardkomponenten verwendbar sind.

Bei einer vorteilhaften Ausgestaltung ist das weitere Filter ein PT1-Filter. Von Vorteil ist dabei, dass die Schaltung des Standes der Technik nur wenige einfache Modifikationen benötigt.

Bei einer vorteilhaften Ausgestaltung ist für den Hochlaufgeber der dem Nennstrom des Umrichters entsprechende Wert in einer Zeit zwischen 5 und 10 µs erreichbar. Von Vorteil ist dabei, dass die Filterung sehr effektiv ist und die Spannungs-Zeit-Fläche viel niedriger ist als bei Verwendung eines PT1-Filters mit entsprechender Zeitkonstante.

Bei einer vorteilhaften Ausgestaltung hat das PT1-Filter eine Zeitkonstante mit einem Wert zwischen 15 und 25 µs, insbesondere von etwa 20 µs. Von Vorteil ist dabei, dass Komponenten des Standes der Technik verwendbar sind.

Weitere Vorteile ergeben sich aus den Unteransprüchen.

### Bezugszeichenliste

- 1: Filter
- 2: Mikrocontroller
- 3: Hochlaufgeber
- 31: Vergleicher
- 32: Integrierer mit Pegelumsetzer
- 41: Operationsverstärker
- 42: Operationsverstärker
- R1: Widerstand
- R2: Widerstand
- C1: Kapazität
- C2: Kapazität

Die Erfindung wird nun anhand von Abbildungen näher erläutert:

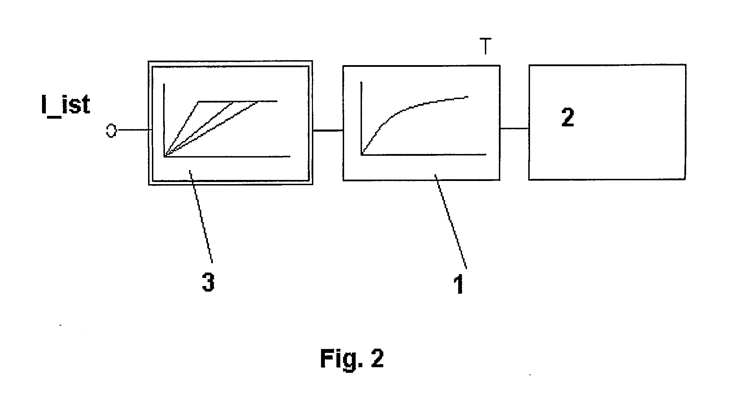

In der Figur 2 ist ein wesentliches Merkmal der Erfindung skizziert. Den Stromerfassungsmitteln nachgeschaltet ist ein Hochlaufgeber 3. Dessen Ausgangssignal wird der üblichen Filterung, also dem Tiefpassfilter 1, zugeführt und dann die so geglätteten Signale dem Mikrocontroller.

Der Hochlaufgeber hat im Idealfall die Eigenschaft, dass sein Ausgangssignal mit fester Änderungsgeschwindigkeit ansteigt, solange die Ausgangsspannung kleiner als die Eingangsspannung ist. Ebenso fällt sein Ausgangssignal mit fester Änderungsgeschwindigkeit ab, solange die Ausgangsspannung größer als die Eingangsspannung ist. Wenn also das Eingangssignal sich langsamer ändert als diesen beiden Änderungsgeschwindigkeiten entspricht, gleicht das Ausgangssignal dem Eingangssignal. Bei der praktischen Ausführung ergeben sich Abweichungen von diesem Idealverhalten.

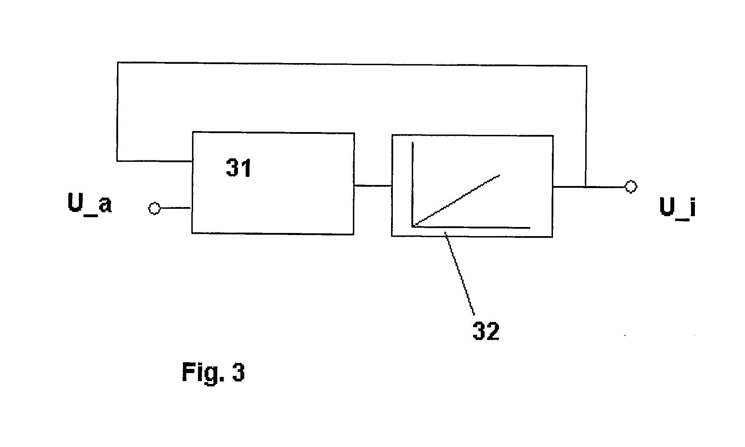

In Figur 3 ist ein prinzipieller Aufbau des Hochlaufgebers gezeigt. Dabei wird der Ausgang eines Vergleichers 31 einem Integrierer 32 zugeführt und das Ausgangssignal des Integrierers 32 vom Vergleicher 31 verwendet. Solange also zwischen Eingangs- und Ausgangsgröße des Hochlaufgebers nach Figur 3 eine Differenz besteht, wird der Ausgang des Vergleichers 31 einen positiven oder negativen Wert aufweisen abhängig von dem Vorzeichen der Differenz. Das Ausgangssignal des Integrierers 32 wächst linear mit der Zeit an beziehungsweise fällt linear mit der Zeit. Insgesamt wird also eine kurzzeitig auftretende rechteckförmig verlaufende Eingangsgröße in einen kleinen Dreieckspuls verwandelt. Die Steigung der dreieckförmigen Verlaufes ist abhängig von der Zeitkonstanten des Integrierers. Diese wird bei der Erfindung derart gewählt, dass sie größer ist als die typische Zeitdauer der Umladestromspitze für die Aufladung der Kabelkapazitäten.

Die maximale Steigung des Hochlaufgeber-Ausgangssignales ist derart gewählt, dass sie betragsmäßig stets größer ist als die maximal auftretenden Steigungen des Motorstromverlaufes. Diese Steigungen des Motorstromverlaufes sind wesentlich bestimmt durch die Induktivität des Elektromotors und die angelegte Spannung und die induzierte Spannung im Motor. Somit findet keine Tiefpassfilterung der Motorströme statt sondern der zu messende Stromverlauf wird im Wesentlichen unverändert den nachfolgenden

Schaltungsteilen durchgeleitet. Die Umladestromspitzen hingegen sind stark reduziert, weil diese eine wesentlich höhere Steigung aufweisen als die genannte maximale Steigung des Hochlaufgeber-Ausgangssignales.

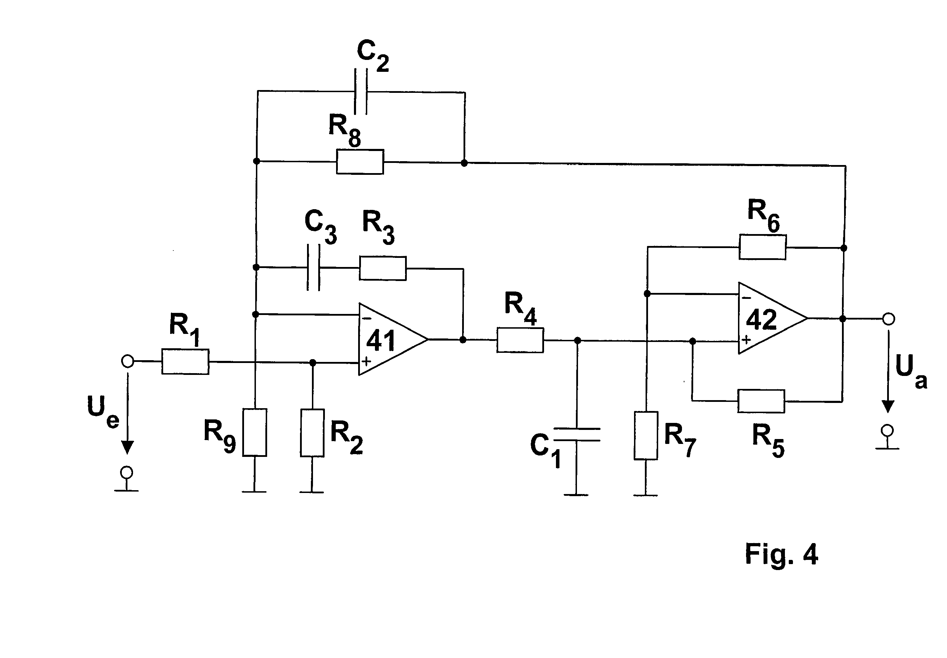

In Figur 4 ist ein konkreter beispielhafter Schaltplan gezeigt. In Figur 4 ist der Vergleicher mittels des Operationsverstärkers 41 samt umgebender Beschaltung ausgeführt. Dessen Ausgangssignale werden dem Integrierer 42, R4, R5, R6, R7 und C1 mit Pegelumsetzung zugeführt, wobei dieser Integrierer eine Zeitkonstante zwischen 2 und 10 µs aufweist und der Operationsverstärker 42 zur Pegelumsetzung vorgesehen ist. Die Rückführung des Ausgangssignals zum Eingang des Vergleichers erfolgt über den Widerstand R8. Die Kapazität C2 dient zum Verhindern von Schwingverhalten der Anordnung. Auch weitere Bauelemente sind derart vorgesehen und dimensioniert, dass Schwingverhalten verhindert wird , wie beispielsweise C3. Der Vergleicher ist als Verstärker mit hoher Verstärkung realisiert, die durch R1, R9, R2 und R8 bestimmt ist.

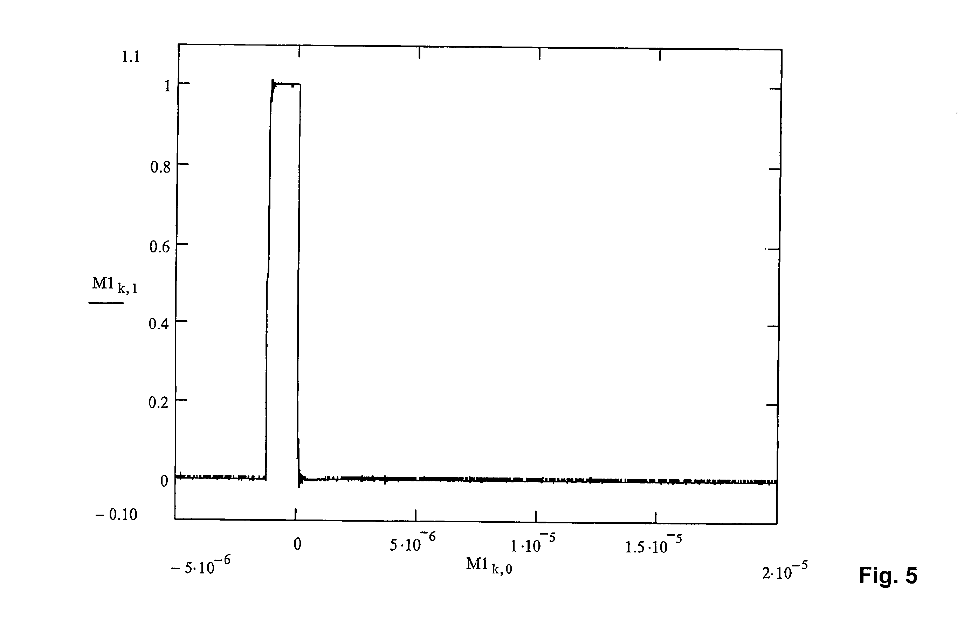

In Figur 5 ist ein beispielhafter Puls gezeigt, der den zeitlichen Verlauf einer auf 1 normierten Umladestromspitze symbolisch skizziert, die eine Pulsbreite von etwas mehr als 1 µs aufweist. Reale Umladestromspitzen bei geschirmten Kabeln von einigen Metern Länge, beispielsweise 20m, weisen Spitzenwerte von einigen Ampere, beispielsweise 10 Ampere und mehr, auf. Die realen zeitlichen Verläufe sind keine rechteckförmigen Pulse, wie in Figur 5 gezeigt, sondern weisen ein stark gedämpftes Schwingverhalten auf, das auch mitbestimmt wird von der Induktivität des Kabels und von anderen Größen. Der symbolische Verlauf der Umladestromspitze dient aber zum besseren Verständnis der Erfindung und des Verhaltens des Hochlaufgebers im Vergleich zum Stand der Technik. Die Spannungszeitfläche der dargestellten symbolischen Umladestromspitze ist vergleichbar zu realen Umladestromspitzen.

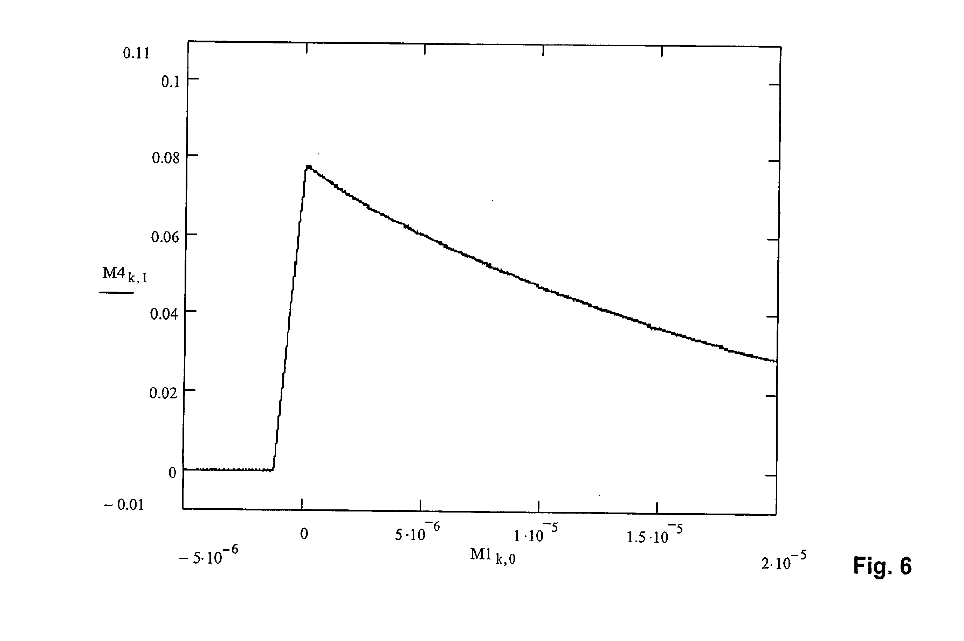

Figur 6 zeigt die gemessene Antwort eines konventionellen PT1-Filters mit einer Zeitkonstante von 20µs auf die Umladestromspitze nach Figur 5. Dies entspricht dem Stand der Technik. Der gefilterte Wert erreicht die Höhe von 0,08, also 8 % der realen Umladestromspitze. Die Zeitdauer der Entladung des PT1-Filters ist sehr groß. Die Spannungs-Zeitfläche ist ebenfalls sehr groß.

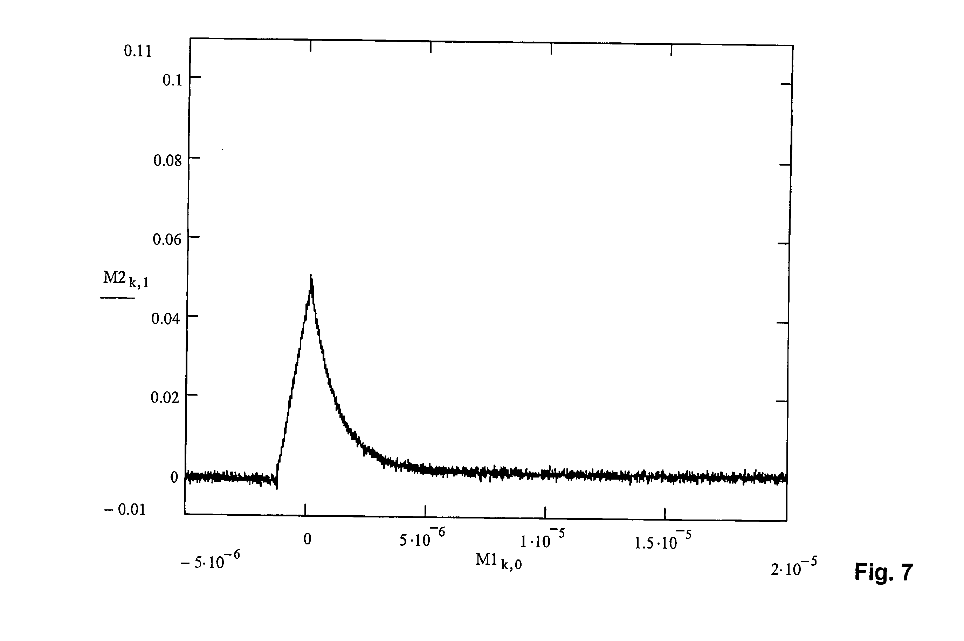

Figur 7 zeigt die gemessene Antwort des Hochlaufgebers auf die Umladestromspitze nach Figur 5. Der Spitzenwert erreicht die Höhe von 0,05, also nur 5 % der realen Umladestromspitze. Die Zeitdauer der Entladung des Hochlaufgebers ist sehr klein und liegt bei etwa 2 µs. Die Spannungs-Zeitfläche ist ebenfalls sehr klein. Abweichungen von der idealen Dreiecksform der Antwort ergeben sich daraus, dass der Vergleicher keine unendlich hohe Verstärkung aufweist sondern zur Unterdrückung von Schwingverhalten nur eine endliche Verstärkung aufweist.

Der Operationsverstärker 41 ist vorteiligerweise derart gewählt, dass er innerhalb weniger als 200 ns aus der Sättigung in den aktiven Regelbereich.

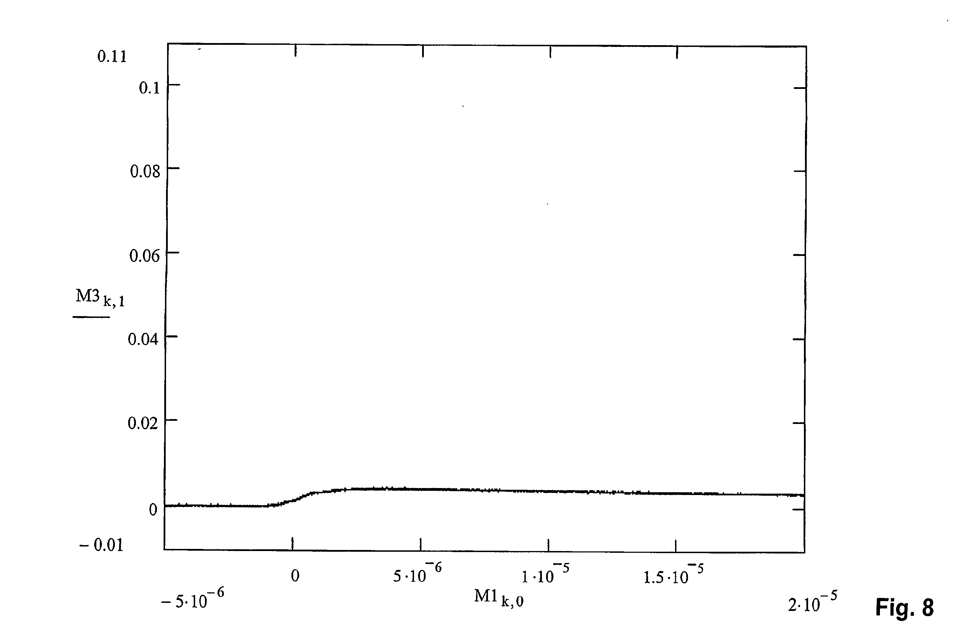

Figur 8 zeigt die gemessene Antwort, wenn dem Hochlaufgeber 3 der übliche Filter 1 nachgeschaltet wird. Es ist deutlich zu sehen, dass die Umladestromspitze nur geringste Auswirkung auf das dem Mikrocontroller 2 zugeführte Ausgangssignal hat.

Somit ist bei der Erfindung ein Hochlaufgeber vorgesehen, der Umladestromspitzen hervorragend unterdrückt und somit auch bei Umrichtern mit langen Kabeln zum versorgten Motor eine sehr gute Regelqualität ermöglicht.

## Patentansprüche

1. Umrichter,
umfassend mindestens Mittel zur Erfassung der Ströme, die dem vom Umrichter versorgten Elektromotor zugeführt werden,
wobei die Mittel zur Stromerfassung innerhalb des Umrichters angeordnet sind,
wobei die Ausgangs-Signale der Mittel, also die von den Mitteln erfassten Stromwerte, einem nichtlinearen Filter zugeführt werden, dessen Ausgangssignale einem weiteren Filter (1) zugeführt werden, das mit einem Analog-Digital-Wandler verbunden ist,
wobei der Analog-Digital-Wandler in einem Mikrocontroller oder Mikroprozessor integriert ist,
**dadurch gekennzeichnet, dass**
das nichtlineare Filter ein Hochlaufgeber (3) ist, dessen Ausgangssignale einem weiteren Filter (1), das mit dem Analog-Digital-Wandler-verbunden ist, zugeführt werden.

2. Umrichter nach mindestens einem der vorangegangenen Ansprüche,
**dadurch gekennzeichnet, dass**
der Hochlaufgeber (3) einen Vergleicher (31) und einen Integrierer (32) umfasst.

3. Umrichter nach mindestens einem der vorangegangenen Ansprüche,
**dadurch gekennzeichnet, dass**
das weitere Filter (1) ein PT1-Filter ist.

4. Umrichter nach mindestens einem der vorangegangenen Ansprüche,
**dadurch gekennzeichnet, dass**
für den Hochlaufgeber (3) der dem Nennstrom des Umrichters entsprechende Wert in einer Zeit zwischen 5 und 10 µs erreichbar ist.

5. Umrichter nach mindestens einem der vorangegangenen Ansprüche,
**dadurch gekennzeichnet, dass**
das PT1-Filter (1) eine Zeitkonstante mit einem Wert zwischen 15 und 25 µs hat, insbesondere von etwa 20 µs.

## Claims

1. Converter,
comprising at least means for sensing the currents fed to the electric motor powered by the converter,
the means for current sensing being arranged inside the converter,
the output signals of the means, i.e. the current values sensed by the means, being fed to a nonlinear filter, whose output signals are fed to an additional filter (1) that is connected to the analog-to-digital converter,
the analog-to-digital converter being integrated in a microcontroller or microprocessor,
**characterised in that**
the nonlinear filter is a ramp generator (3), whose output signals are fed to an additional filter (1) that is connected to the analog-to-digital converter.

2. Converter according to at least one of the preceding claims,
**characterised in that**
the ramp generator (3) comprises a comparator (31) and an integrator (32).

3. Converter according to at least one of the preceding claims,
**characterised in that**
the additional filter (1) is a PT1 filter.

4. Converter according to at least one of the preceding claims,
**characterised in that**
the value corresponding to the rated current of the converter is attainable for the ramp generator (3) in a time between 5 and 10 µs.

5. Converter according to at least one of the preceding claims,
**characterised in that**
the PT1 filter (1) has a time constant having a value of between 15 and 25 µs, in particular, approximately 20 µs.

## Revendications

1. Convertisseur
comportant au moins des moyens de détection des courants délivrés au moteur électrique alimenté par ledit convertisseur,
lesdits moyens détecteurs de courants étant logés à l'intérieur dudit convertisseur,
les signaux de sortie desdits moyens, c'est-à-dire les valeurs de courant détectées par lesdits moyens, étant appliqués à un filtre non linéaire dont les signaux de sortie sont appliqués à un filtre supplémentaire (1) raccordé à un convertisseur analogique-numérique,
ledit convertisseur analogique-numérique étant intégré dans une microcommande ou dans un microprocesseur,
**caractérisé par le fait que**
le filtre non linéaire est un générateur de rampes (3), dont les signaux de sortie sont appliqués à un filtre supplémentaire (1) connecté au convertisseur analogique-numérique.

2. Convertisseur selon au moins la revendication précédente,
**caractérisé par le fait que**
le générateur de rampes (3) comprend un comparateur (31) et un intégrateur (32).

3. Convertisseur selon au moins l'une des revendications précédentes,
**caractérisé par le fait que**
le filtre supplémentaire (1) est un filtre de type PT1.

4. Convertisseur selon au moins l'une des revendications précédentes, **caractérisé par le fait que**
la valeur, affectée au générateur de rampes (3) et correspondant au courant nominal dudit convertisseur, peut être atteinte en un temps compris entre 5 et 10 µs.

5. Convertisseur selon au moins l'une des revendications précédentes,
**caractérisé par le fait que**
le filtre (1) de type PT1 présente une constante de temps ayant une valeur comprise entre 15 et 25 µs, et mesurant environ 20 µs en particulier.
